# DEMANDE DE BREVET EUROPEEN

(11) **EP 1 801 627 A2**
(43) Date de publication de la demande: **27.06.2007**
(21) Numéro de dépôt: 06291998.0
(22) Date de dépôt: 20.12.2006
(51) Int. Cl.: G02B 7/02, G02C 7/12, G02B 3/00, G02B 5/30

(54) **Ensemble comportant une lentille optique et un support, ainsi que procede les mettant en oeuvre**

(30) Priorité: 23.12.2005 FR 0513267
(71) Demandeur: ESSILOR INTERNATIONAL Compagnie Générale d'Optique, F-94220 Charenton le Pont (FR)
(72) Inventeur: Darmes, Daniel, c/o Essilor International, 94220 Charenton Le Pont (FR); Felten, Yohann, c/o Essilor International, 94220 Charenton Le Pont (FR); Koscher, Matthieu, c/o Essilor International, 94220 Charenton Le Pont (FR); Rychel, Dominique, c/o Essilor International, 94220 Charenton Le Pont (FR)
(74) Mandataire: Lepelletier-Beaufond, François

(57) **Abrégé**

La lentille optique (1) comporte une tranche circulaire (2) dans laquelle est pratiquée une encoche (3) grâce à laquelle la lentille (1) peut être maintenue par au moins une partie de sa tranche (2) et indexée angulairement par l'encoche (3) vis-à-vis du support.

## Description

L'invention concerne le domaine de la fabrication des lentilles optiques.

L'invention concerne plus particulièrement les procédés et les dispositifs permettant le traitement d'une lentille optique en vue de lui conférer les propriétés souhaitées.

Un tel traitement peut par exemple consister à déposer un revêtement de surface sur les faces d'une lentille ophtalmique pour lui conférer des propriétés mécaniques ou optiques particulières.

On connaît du document WO 00/14295 un support pour lentille optique et son procédé de mise en oeuvre permettant de maintenir une lentille optique dans un appareillage de traitement de type « spin coating ». Ce support comporte une embase sur laquelle sont montés trois plots d'appui pour le maintien de la lentille optique par sa tranche.

Le but de l'invention est d'améliorer ce type de dispositifs et de procédés de l'art antérieur.

A cet effet, l'invention vise un ensemble comportant une lentille optique telle que décrite ci-dessus et un support sur lequel est montée ladite lentille optique, le support comportant au moins trois plots pour le maintien de la lentille optique par sa tranche, caractérisé en ce que la lentille comporte une tranche circulaire dans laquelle est pratiquée une seule encoche et en ce qu'elle est maintenue par la coopération de sa tranche avec les trois plots du support et indexée angulairement par l'engagement de l'un des plots du support dans l'encoche.

Selon un autre objet, l'invention vise un procédé de traitement d'une lentille optique, caractérisé en ce que :
- on met en oeuvre un poste de traitement présentant une direction déterminée de traitement ;
- c'est sur une lentille optique produite au préalable et appartenant à un ensemble tel que décrit ci-dessus que ledit traitement est pratiqué ; et
- le traitement comporte une étape d'orientation angulaire de la lentille optique par maintien de la lentille optique par sa tranche et indexation angulaire par l'encoche de la lentille optique afin de faire coïncider la droite reliant sensiblement le centre de la lentille optique à l'encoche avec ladite direction déterminée de traitement.

L'invention met en oeuvre un système d'indexation permettant de définir un axe propre à la lentille optique traitée. La lentille optique peut ainsi être orientée angulairement pendant une étape de traitement, étant entendu qu'au sens de l'invention, un traitement comprend plusieurs étapes dont par exemple une étape de dépôt d'un revêtement, une étape de structuration, d'orientation, ou de polymérisation dudit revêtement.

Lorsqu'une opération conférant à une lentille optique des propriétés particulières dans une direction déterminée est réalisée sur un poste de fabrication, l'invention permet de déplacer la lentille, voire même de la changer de poste de fabrication, en gardant la possibilité de retrouver à tout moment ladite direction déterminée. Ceci est particulièrement intéressant lorsque le traitement comprend le dépôt d'un revêtement polarisant. En effet, il est indispensable de pouvoir repérer l'axe de polarisation sur la lentille optique jusqu'à la fin de sa réalisation.

L'invention convient ainsi particulièrement au dépôt successif de différents revêtements anisotropes et d'orienter ces revêtements les uns par rapport aux autres, grâce à cette indexation angulaire, et ce même si les revêtements successifs ont lieu à différents postes de fabrication impliquant un déplacement de la lentille optique et donc une perte de repère angulaire.

II est par exemple possible grâce à l'invention de mettre en oeuvre un procédé selon lequel un premier revêtement est déposé à l'état liquide sur une face d'une lentille optique, ce revêtement subissant ensuite une polymérisation par des rayons ultraviolets passant à travers un polariseur de sorte que le premier revêtement obtenu présente une structuration de ses molécules selon une direction déterminée par le polariseur. Un second revêtement est ensuite déposé sur le premier, puis polymérisé.

Selon des caractéristiques préférées de la lentille optique appartenant à l'ensemble :
- l'encoche présente un profil en forme de U;
- l'encoche présente un profil en arc de cercle;
- le diamètre des portions circulaires du profil de l'encoche est d'environ 0,5 à 5 mm ;
- le diamètre des portions circulaires du profil de l'encoche est d'environ 1 à 3 mm ;
- le diamètre des portions circulaires du profil de l'encoche est d'environ 1,5 mm.

Selon des caractéristiques préférées du support appartenant à l'ensemble:
- le support comporte en outre des moyens de montage destinés à coopérer avec des moyens de réception d'un poste de traitement ;
- le support comporte en outre des moyens d'indexation angulaire ;
- lesdits moyens de montage comportent un anneau saillant ou rentrant par rapport au support, préférentiellement saillant, et lesdits moyens d'indexation angulaire comportent une première entaille pratiquée dans l'anneau ;
- les moyens d'indexation angulaire comportent une deuxième entaille pratiquée dans l'anneau et diamétralement opposée à la première entaille ;
- l'anneau comporte un chanfrein d'engagement ;
- chacun des plots comporte un socle tronconique surmonté d'un doigt, l'un des doigts étant engagé dans l'encoche, la lentille optique étant appuyée sur le sommet du socle tronconique, au niveau de sa jonction avec le doigt ;
- l'angle formé entre la pente du socle tronconique et le support est inférieur à 85° ;
- ledit angle est compris entre 30 et 60° ;
- ledit angle est sensiblement égal à 45°;
- le diamètre du doigt correspond sensiblement aux dimensions de l'encoche ;
- le plot qui est engagé dans l'encoche comporte un moyen de repérage le différenciant des autres plots ;
- la distance entre chacun des plots et le centre du support est comprise entre 97% et 100% du rayon de la lentille optique.
- D'autres caractéristiques et avantages de l'invention apparaissent à la lumière de la description qui va suivre d'un mode de réalisation préféré, donné à titre d'exemple non limitatif, description faite en référence aux dessins annexés dans lesquels :

- la figure 1 représente en perspective une lentille optique selon l'invention ;
- la figure 2 est une vue de dessus de la lentille représentée à la figure 1;
- la figure 3 représente en perspective un support adapté à recevoir la lentille optique des figures 1 et 2 ;
- la figure 4 est une vue partielle agrandie du support représenté à la figure 3 ;
- la figure 5 représente en perspective un ensemble selon l'invention comportant la lentille des figures 1 et 2 montée sur le support des figures 3 et 4 ;
- la figure 6 représente en perspective le support de la figure 3 en position retournée.

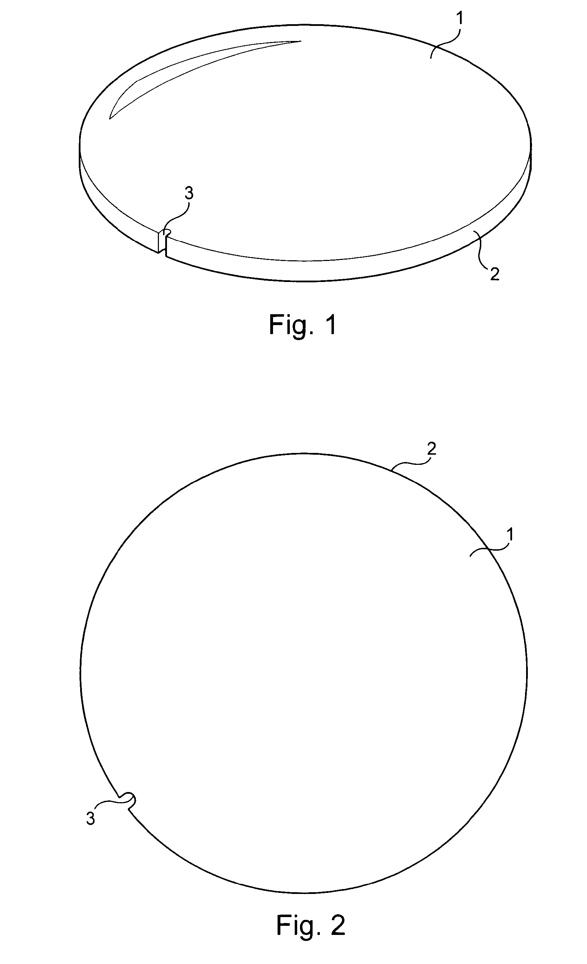

La figure 1 montre une lentille optique 1 qui est, dans le présent exemple, une lentille ophtalmique employée dans la réalisation d'une paire de lunettes. Au sens de l'invention, on entend par lentille ophtalmique les lentilles s'adaptant notamment à une monture de lunette ou à un support de visière, ayant pour fonction de protéger l'oeil et/ou de corriger la vue, ces lentilles étant choisies parmi les lentilles afocales, unifocales, bifocales, trifocales et progressives. Ces lentilles ophtalmiques peuvent comprendre un substrat organique ou minéral. Par substrat, on entend le matériau transparent constitutif de base de la lentille ophtalmique. Ce matériau sert de support à l'empilement d'un ou plusieurs revêtements comprenant notamment les revêtements polarisants. Cette lentille 1 est tout d'abord produite de manière classique par moulage et/ou usinage afin d'obtenir une lentille de forme circulaire présentant une face concave et une face convexe et présentant les caractéristiques optiques désirées.

La lentille 1 est destinée à subir un certain nombre de traitements dont des revêtements de surface appliqués sur l'une ou sur chacune de ses faces, puis à être ensuite détourée, c'est-à-dire usinée par sa tranche, afin que son contour corresponde au contour des cercles de la monture de lunettes dans laquelle la lentille 1 peut être destinée à être montée.

La lentille 1 de la figure 1 comporte une tranche 2 qui est circulaire (voir vue de dessus de la figure 2).

Sur la tranche 2 de la lentille 1 est pratiquée une encoche 3.

L'encoche 3 présente un profil en U et s'étend sur toute la hauteur de la tranche 2.

L'encoche 3 peut être réalisée par usinage d'une lentille à contour circulaire, ou directement au moulage de la lentille 1.

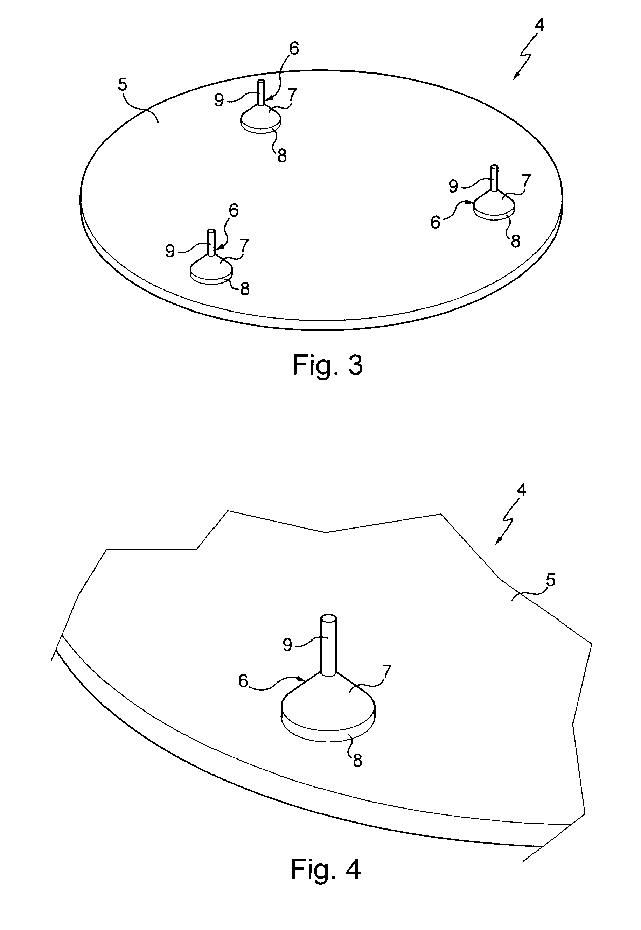

La figure 3 représente en perspective un support 4 destiné au maintien et à la mise en position de la lentille 1 en vue de son traitement.

Le support 4 comporte une embase 5 ayant préférentiellement la forme d'un disque dont le diamètre est supérieur au diamètre de la lentille 1 destinée à être supportée.

Le support 4 comporte de plus trois plots 6 montés sur l'embase 5. Les trois plots 6 sont de préférence positionnés de façon équidistante par rapport au centre de l'embase 5 de sorte que le support 4 présente un angle de 120° entre chaque plot 6 mesuré au centre de l'embase 5.

De préférence, les plots 6 sont équidistants du centre de l'embase 5. La distance entre chaque plot et le centre de l'embase 5 est de préférence au moins égale à 97% du rayon de la lentille 1 destinée à être maintenue, et est de préférence inférieure à 100% dudit rayon.

La figure 4 fournit un agrandissement de l'un des plots 6.

Chacun de ces plots 6 comporte un socle tronconique 7 fixé sur l'embase 5 par une portion cylindrique 8.

Le socle tronconique 7 est prolongé par un doigt 9 s'étendant perpendiculairement à l'embase 5.

La portion cylindrique 8 peut présenter un diamètre compris entre 2 mm et 10 mm, préférentiellement entre 4 mm et 8 mm.

La hauteur de la portion cylindrique 8 est choisie en fonction de la forme convexe ou concave de la lentille, de son rayon de courbure ainsi que des dimensions de la lentille1. D'une façon avantageuse, cette hauteur est telle que la lentille se situe au plus près de l'embase sans toutefois toucher cette dernière. Ainsi, dans le cas d'une lentille convexe, la hauteur de la portion cylindrique 8 est avantageusement comprise entre 0,5 mm et 8 mm, préférentiellement inférieur à 5 mm. Dans le cas d'une lentille concave, cette hauteur est avantageusement comprise entre 2 mm et 10 mm, préférentiellement entre 5 mm et 8 mm.

En ce qui concerne la pente du socle tronconique 7, l'angle formé par une génératrice du socle tronconique 7 avec l'embase 5 est avantageusement inférieur à 85° et préférentiellement compris entre 30° et 60°. Dans le présent exemple préféré, cet angle est de 45°.

Le doigt 9 présente avantageusement un diamètre compris entre 0,5 mm et 5 mm, et préférentiellement entre 1 mm et 3 mm.

Le doigt 9 est destiné à venir contre la tranche 2 de la lentille 1 pour son maintien latéral tandis que le sommet du socle tronconique 7, qui crée un décrochement à la base du doigt 9, et destiné à l'assise verticale de la lentille 1.

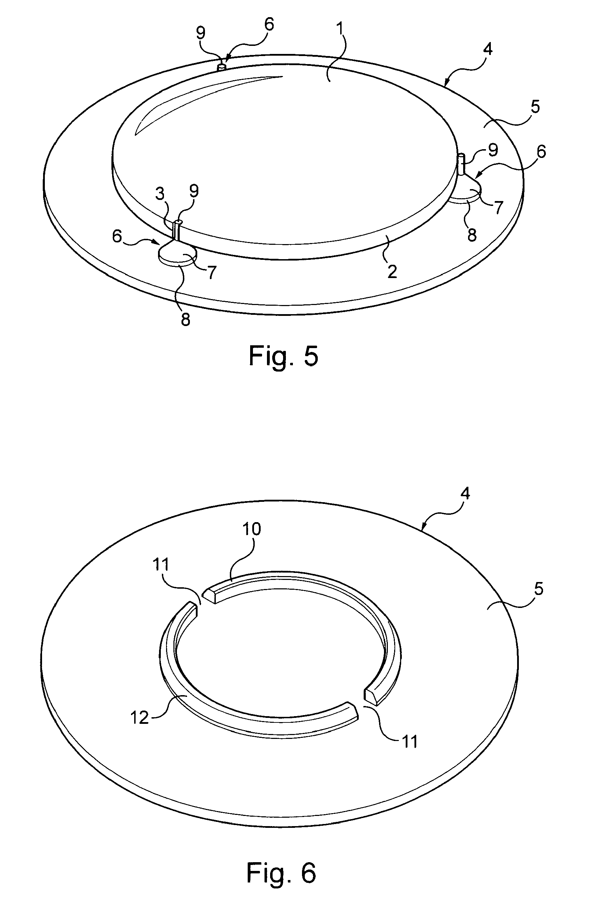

La figure 5 montre la lentille 1 maintenue et mise en position dans le support 4.

La lentille 1 repose sur trois points d'appui constitués chacun par le sommet d'un socle tronconique 7 tandis que les doigts 9 viennent contre la tranche 2 de la lentille 1.

Au niveau de l'encoche 3, la tranche 2 suit le renfoncement délimité par cette encoche 3 dans lequel l'un des plots 6 prend place et s'appuie contre le fond du renfoncement.

La distance entre chacun des plots 6 et le centre de l'embase 5 est choisie pour que, lorsque les doigts 9 sont au contact de la tranche 2 de la lentille 1, la lentille 1 soit sensiblement centrée entre les trois plots 6.

Selon le matériau employé pour la réalisation du support 4, une certaine flexibilité des doigts 9 peut être mise à profit pour maintenir fermement la lentille 1.

Le doigt 9 qui est engagé dans l'encoche 3 permet l'indexation angulaire de la lentille 1. Si la lentille 1 est séparée du support 4 puis à nouveau remontée sur le support 4, la lentille 1 peut retrouver la même position angulaire par rapport au support 4 que lors du premier montage, et ce, de préférence, en engageant dans l'encoche 3 le même doigt 9 que lors du premier montage.

L'un des plots 6 peut avantageusement être identifié par une couleur ou un signe comme étant le plot 6 particulier sur lequel devra toujours être engagée l'encoche 3.

La forme et les dimensions de l'encoche 3 ainsi que les dimensions du doigt 9 sont avantageusement choisies pour que, lorsque le doigt 9 est engagé dans l'encoche 3, cet engagement se fasse sans jeu angulaire de manière que la lentille 1 soit bloquée en rotation sur le support 4.

L'ensemble de la figure 5 peut par exemple être monté dans un équipement adapté à déposer un revêtement sur la face externe de la lentille 1. Dans ce cas de figure, chacun des plots 6 fournit une assise ponctuelle à la lentille 1, au niveau du contact entre le sommet du socle tronconique 7 et la base de la tranche 2. Ce contact ponctuel permet d'éviter les défauts classiques apparaissant lors de la pose d'un revêtement fluide.

En effet, lorsque le revêtement fluide est déposé sur la face externe de la lentille 1, une partie de ce revêtement a tendance à couler le long de la tranche 2 puis à venir au contact des plots 6. Si le revêtement fluide qui a coulé sur les plots 6 peut s'accumuler à cet endroit, des défauts se produisent et peuvent se répercuter jusque sur la face inférieure de la lentille 1, c'est-à-dire la face présente du côté de l'embase 5. Grâce au socle tronconique 7 permettant le contact ponctuel, le revêtement ne dispose pas de surface sur lequel il peut s'accumuler. De plus, la surface du socle tronconique 7 fournit au revêtement une rampe d'évacuation s'étendant à 360° autour du doigt 9, ce qui permet de transférer le revêtement en surplus au niveau des doigts 9 vers l'embase 5 du support et d'en débarrasser la lentille 1.

La figure 6 montre le dessous du support 4. La face inférieure de l'embase 5, c'est-à-dire celle opposée à la face portant les plots 6, comporte ainsi un deuxième dispositif d'indexation angulaire formé d'un anneau 10 saillant de l'embase 5 et comportant deux entailles 11 diamétralement opposées.

L'anneau 10 comporte un chanfrein 12 permettant de faciliter l'engagement de cet anneau 10 sur un équipement adapté.

L'anneau 10 permet en effet de monter le support 4 sur les moyens de réception d'un équipement (non représenté) destiné au traitement de la lentille 1. Dans le cas de l'anneau 10 du présent exemple, ces moyens de réception peuvent être formés d'un orifice cylindrique d'un diamètre ajusté au diamètre externe de l'anneau 10, et de deux languettes saillantes ajustées à la largeur des entailles 11 de sorte que l'anneau 10 peut être engagé dans ces moyens de réception et indexé angulairement. Le support 4 peut être maintenu dans ces moyens de réception par un dispositif de succion ou tout autre moyen connu.

L'anneau 10 d'une part et la coopération de l'encoche 3 avec l'un des plots 6 d'autre part forment un système de double indexation angulaire permettant d'orienter angulairement la lentille 1 sur le support 4 et d'orienter le support 4 par rapport à un équipement, ce qui revient à orienter angulairement la lentille 1 par rapport à un équipement et de pouvoir, par la suite, retrouver cette orientation angulaire.

L'indexation angulaire fournie par l'anneau 10 du présent exemple procure au support 4 une indexation angulaire à 180° près de par la présence de deux entailles 11. Cette indexation angulaire suffit lorsqu'il s'agit simplement de repérer une direction sur la lentille 1, cette direction étant la même à un demi-tour près.

En variante, l'anneau 10 peut comporter une seule entaille 11, procurant ainsi une indexation angulaire unique.

Grâce à cette double indexation angulaire, le procédé suivant peut par exemple être mis en oeuvre.

La lentille 1 est tout d'abord montée sur le support 4, l'un des doigts 9 s'engageant dans l'encoche 3. Le support 4 est ensuite mis en position sur une machine de revêtement qui effectue la pose d'un revêtement fluide sur la surface de la lentille 1.

Le support 4 est ensuite séparé de la machine de revêtement et est disposé dans les moyens de réception d'un four à ultraviolets comprenant des languettes coopérant avec les entailles 11 et équipé d'un polariseur de sorte que le revêtement déposé sur la lentille 1 soit polymérisé et structuré selon une direction déterminée par l'orientation du polariseur. Cette direction définit l'axe d'orientation de la polarisation de la lentille qu'il est nécessaire de connaître jusqu'au montage de la lentille dans la monture de lunettes, par exemple afin de garantir la fonction polarisante à l'objet fini.

Le support 4 est ensuite mis en position dans une seconde machine de revêtement réalisant le dépôt d'un second revêtement fluide sur le premier revêtement qui a été durci par la polymérisation.

Le support 4 est à nouveau disposé dans les moyens de réception d'un four à rayons ultraviolets équipé de languettes s'insérant dans les entailles 11.

Ces différents moyens sont particulièrement bien adaptés, notamment pour le traitement d'une lentille ophtalmique par un revêtement bicouches polarisant tel que décrit dans la demande de brevet EP 1 593 990.

Des variantes de réalisation du support et de la lentille optique décrits peuvent être envisagées sans pour autant sortir du cadre de l'invention. Notamment, ces éléments peuvent mettre en oeuvre un tout autre procédé que celui décrit à titre d'exemple.

De même, les plots 6 peuvent être dépourvus de socle tronconique 7, le socle étant alors formé directement par la portion cylindrique 8 qui forme alors un épaulement à la base du doigt 9, cet épaulement constituant l'assise de la lentille. Le support 4 peut être réalisé d'une seule pièce, par exemple en polymère injectable ou en un alliage métallique adapté.

L'encoche 3 peut avoir un profil en arc de cercle ou tout autre profil.

En variante, le support 4 peut comporter une ventouse centrale en lieu et place des plots 6 pour maintenir la lentille optique par succion sur sa face inférieure.

## Revendications

1. Ensemble comportant une lentille optique (1) et un support (4) sur lequel est montée ladite lentille optique (1), le support (4) comportant au moins trois plots (6) pour le maintien de la lentille optique (1) par sa tranche (2), **caractérisé en ce que** la lentille comporte une tranche circulaire (2) dans laquelle est pratiquée une seule encoche (3) et **en ce qu'**elle est centrée par la coopération de sa tranche (2) avec les trois plots (6) du support (4) et indexée angulairement par l'engagement de l'un des plots (6) du support dans l'encoche (3).

2. Ensemble selon la revendication 1, **caractérisée en ce que** l'encoche (3) présente un profil en forme de U.

3. Ensemble selon la revendication 1, **caractérisée en ce que** l'encoche (3) présente un profil en arc de cercle.

4. Ensemble selon l'une des revendications 1 à 3, **caractérisée en ce que** le diamètre des portions circulaires du profil de l'encoche (3) est d'environ 0,5 à 5 mm.

5. Ensemble selon l'une des revendications 1 à 4, **caractérisée en ce que** le diamètre des portions circulaires du profil de l'encoche (3) est d'environ 1 à 3 mm.

6. Ensemble selon l'une des revendications 1 à 5, **caractérisée en ce que** le diamètre des portions circulaires du profil de l'encoche (3) est d'environ 1,5 mm.

7. Ensemble selon l'une quelconque des revendications 1 à 6, **caractérisé en ce que** le support (4) comporte en outre des moyens de montage (10) destinés à coopérer avec des moyens de réception d'un poste de traitement.

8. Ensemble selon la revendication 7, **caractérisé en ce que** le support (4) comporte en outre des moyens (11) d'indexation angulaire.

9. Ensemble selon la revendication 8, **caractérisé en ce que** lesdits moyens de montage comportent un anneau (10) saillant ou rentrant par rapport au support (4) et **en ce que** lesdits moyens d'indexation angulaire comportent une première entaille (11) pratiquée dans l'anneau (10).

10. Ensemble selon la revendication 9, **caractérisé en ce que** les moyens d'indexation angulaire comportent une deuxième entaille (11) pratiquée dans l'anneau (10) et diamétralement opposée à la première entaille (11).

11. Ensemble selon l'une des revendications 9 et 10, **caractérisé en ce que** l'anneau (10) comporte un chanfrein d'engagement (12).

12. Ensemble selon l'une des revendications 1 à 11, **caractérisé en ce que** chacun des plots (6) comporte un socle tronconique (7) surmonté d'un doigt (9), l'un des doigts étant engagé dans l'encoche (3), la lentille optique (1) étant appuyée sur le sommet du socle tronconique (7), au niveau de sa jonction avec le doigt (9).

13. Ensemble selon la revendication 12, **caractérisé en ce que** l'angle formé entre la pente du socle tronconique et le support (4) est inférieur à 85°.

14. Ensemble selon la revendication 13, **caractérisé en ce que** ledit angle est compris entre 30 et 60°.

15. Ensemble selon l'une des revendications 13 et 14, **caractérisé en ce que** ledit angle est sensiblement égal à 45°.

16. Ensemble selon l'une des revendications 12 à 15, **caractérisé en ce que** le diamètre du doigt (9) correspond sensiblement aux dimensions de l'encoche (3).

17. Ensemble selon l'une des revendications 1 à 16, **caractérisé en ce que** le plot (6) qui est engagé dans l'encoche (3) comporte un moyen de repérage le différenciant des autres plots (6).

18. Ensemble selon l'une des revendications 12 à 17, **caractérisé en ce que** la distance entre chacun des plots (6) et le centre du support (4) est comprise entre 97% et 100% du rayon de la lentille optique (1).

19. Procédé de traitement d'une lentille optique, **caractérisé en ce que** :
- on met en oeuvre un poste de traitement présentant une direction déterminée de traitement ;
- c'est sur une lentille optique (1) produite au préalable et appartenant à un ensemble conforme à la revendication 1 que ledit traitement est pratiqué ; et
- le traitement comporte une étape d'orientation angulaire de la lentille optique (1) par maintien de la lentille optique (1) par sa tranche (2) et indexation angulaire par l'encoche (3) de la lentille optique (1) afin de faire coïncider la droite reliant sensiblement le centre de la lentille optique (1) à l'encoche (3) avec ladite direction déterminée de traitement.
